(19) Europäisches Patentamt
European Patent Office
Office européen des brevets

(11) Veröffentlichungsnummer: **0 014 344**
**B1**

(12) # EUROPÄISCHE PATENTSCHRIFT

(45) Veröffentlichungstag der Patentschrift: **21.04.82**

(51) Int. Cl.³: **C 07 D 405/04**, D 06 L 3/12, C 09 B 57/02

(21) Anmeldenummer: **80100204.9**

(22) Anmeldetag: **16.01.80**

(54) **Cumarinverbindungen, Verfahren zu ihrer Herstellung und deren Verwendung als Weisstöner und Laserfarbstoffe.**

(30) Priorität: **23.01.79 DE 2902470**

(43) Veröffentlichungstag der Anmeldung: **20.08.80 Patentblatt 80/17**

(45) Bekanntmachung des Hinweises auf die Patenterteilung: **21.04.82 Patentblatt 82/16**

(84) Benannte Vertragsstaaten: **CH DE FR GB**

(56) Entgegenhaltungen:
**CHEMICAL ABSTRACTS, Band 80, Nr. 22, Juni 1974, Zusammenfassung Nr. 134 943v, Seite 91, Columbus, Ohio, US**

(73) Patentinhaber: **BAYER AG, Zentralbereich Patente, Marken und Lizenzen, D-5090 Leverkusen 1, Bayerwerk (DE)**

(72) Erfinder: **Eckstein, Udo, Dr., Morgengraben 2, D-5000 Köln 80 (DE)**
Erfinder: **Raue, Roderich, Dr., Berta-von-Suttner-Strasse 48, D-5090 Leverkusen 1 (DE)**
Erfinder: **Schellhammer, Carl-Wolfgang, Dr., Katharinental 26, D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Cumarinverbindungen, Verfahren zu ihrer Herstellung und deren Verwendung als Weißtöner und Laserfarbstoffe

Die vorliegende Erfindung betrifft neue, in 3-Stellung sulfonylsubstituierte Cumarine der Formel

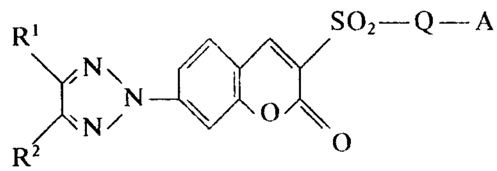

(I)

worin

A gegebenenfalls durch Hydroxy, Chlor, Cyano, Sulfo, Alkoxy oder einen Rest der Formel

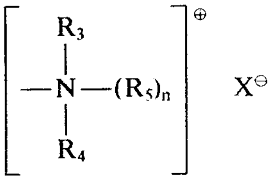

substituiertes Alkyl; Benzyl; Alkenyl oder gegebenenfalls durch Chlor, Alkyl, Alkoxy substituiertes Phenyl, Naphthyl oder Biphenyl,

Q NH oder eine direkte Bindung,

$R^1$ Alkyl, Alkoxy, gegebenenfalls durch Alkyl, Alkoxy oder Chlor substituiertes Phenyl oder Styryl,

$R^2$ Wasserstoff, Chlor oder $R^1$,

$R_3$ und $R_4$ unabhängig voneinander Wasserstoff, Alkyl, Benzyl, Phenyl oder gemeinsam zusammen mit dem Stickstoffatom Morpholino, Piperidino, Piperazino, Pyrrolidino oder Hexamethylenimino,

$R_5$ Alkyl, Alkenyl oder Benzyl,

n 0 oder 1 und

X einen farblosen Säurerest bedeuten, wobei die genannten Alkyl-, Alkenyl- und Alkoxyreste bis zu 4 C-Atome aufweisen können.

Von besonderem technischen Wert sind die Verbindungen der Formel II

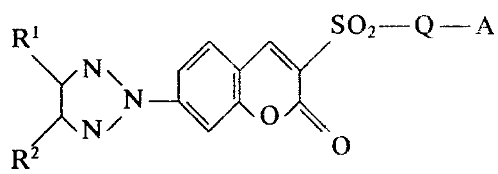

(II)

worin

$R^1$ Alkyl oder gegebenenfalls durch Alkyl, Alkoxy oder Chlor substituiertes Phenyl,

$R^2$ Wasserstoff, Chlor oder $R^1$,

Q eine direkte Bindung und

A gegebenenfalls durch Hydroxy, Chlor, Cyano, Sulfo oder Alkoxy substituiertes Alkyl, Benzyl, Alkenyl oder gegebenenfalls durch ein bis zwei Chlor, Alkyl, Alkoxy substituiertes Phenyl oder Biphenyl bedeuten und die Alkyl-, Alkenyl- und Alkoxyreste die vorgenannte Bedeutung haben.

Die Cumarinderivate der Formel I können nach an sich bekannter Methode dadurch hergestellt werden, daß man Salicylaldehyde der Formel

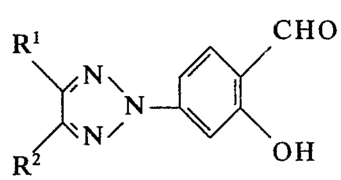

(III)

mit substituierten Essigestern der Formel

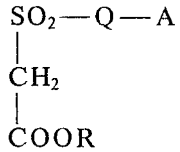 (IV)

worin
R für $C_1$- bis $C_4$-Alykl steht,
in Gegenwart von basischen Katalysatoren kondensiert.

Ein weiteres geeignetes Verfahren zur Herstellung von Cumarinverbindungen der Formel I besteht darin, daß man Triazolylylsalicylaldehyde der Formel III mit substituierten Essigsäuren der Formel

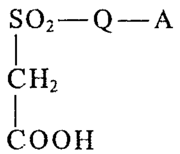 (V)

in Gegenwart von Natriumacetat und Essigsäureanhydrid kondensiert.

Weiterhin lassen sich die Cumarinverbindungen der Formel i dadurch herstellen, daß man 7-Hydrazinocumarinderivate der Formel

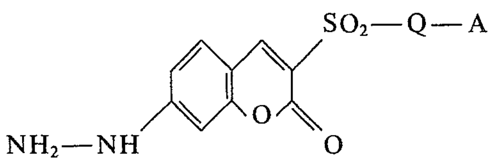 (VI)

mit $\alpha$-Isonitrosoketonen der Formel

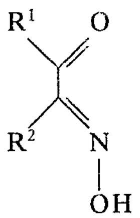 (VII)

zu Verbindungen der Formel

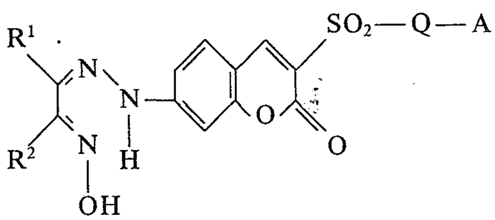 (VIII)

kondensiert und anschließend cyclisiert.

Ein ebenso vorteilhaftes Verfahren zur Herstellung von Cumarinverbindungen der Formel I besteht darin, daß man auf aromatische Amine der Formel

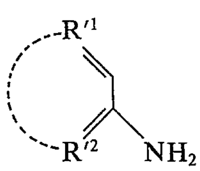 (IX)

wobei
$R''^1$ und $R''^2$ zusammen ein gegebenenfalls substituiertes Benzo- oder Naphthosystem bedeuten,
7-Diazoniumsalze der Formel

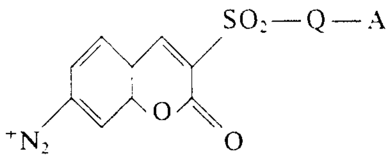

(X)

zu Verbindungen der Formel

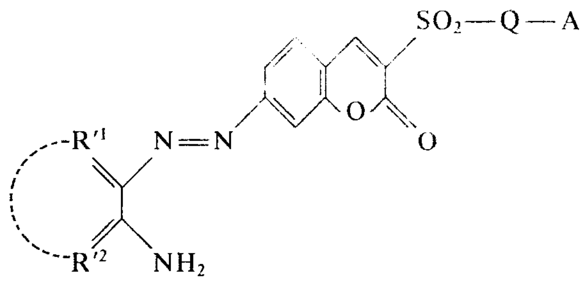

(XI)

kuppelt und diese anschließend durch Erhitzen in Gegenwart von Cu(II)-salzen dehydrierend cyclisiert.

Die Ausgangsverbindungen der Formeln III – XI sind literaturbekannt oder nach Analogverfahren (vgl. zum Beispiel JA 73/17 626) herstellbar.

Geeignete Verbindungen der Formel III sind beispielsweise:

4-(4′-Phenyl-1′,2′,3′-triazol-2′-yl)-salicylaldehyd,
4-(4′-Phenyl-5′-methyl-1′,2′,3′-triazol-2′-yl)-salicylaldehyd,
4-(4′-Methyl-5′-äthyl-1′,2′,3′-triazol-2′-yl)-salicylaldehyd,
4-(4′,5′-Dimethyl-1′,2′,3′-triazol-2′-yl)-salicylaldehyd,
4-(4′-Biphenylyl-5′-methyl-1′,2′,3′-triazol-2′-yl)-salicylaldehyd,
4-(4′-Styryl-1′,2′,3′-triazol-2′-yl)-salicylaldehyd,
4-(4′-Chlor-5′-phenyl-1′,2′,3′-triazol-2′-yl)-salicylaldehyd,
4-(4′-Methyl-5′-butyl-1′,2′,3′-triazol-2′-yl)-salicylaldehyd,
4-(4′-Chlor-5′-methyl-1′,2′,3′-triazol-2′-yl)-salicylaldehyd,
4-(4′-Methoxy-1′,2′,3′-triazol-2′-yl)-salicylaldehyd,
4-(4′-Methyl-5′-butoxy-1′,2′,3′-triazol-2′-yl)-salicylaldehyd,
4-(4′-Methyl-5′-carbäthoxy-1′,2′,3′-triazol-2′-yl)-salicylaldehyd,
4-(4′-Phenyl-5′-cyano-1′,2′,3′-triazol-2′-yl)-salicylaldehyd,
4-(4′-Äthyl-5′-phenyl-1′,2′,3′-triazol-2′-yl)-salicylaldehyd und
4-(4′-Chlor-5′-phenyl-1′,2′,3′-triazol-2′-yl)-salicylaldehyd.

Geeignete Verbindungen der Formel IV sind beispielsweise:

Methylsulfonylessigsäureäthylester, Äthylsulfonylessigsäureäthylester,
n-Butylsulfonylessigsäureäthylester, Iso-propylsulfonylessigsäureäthylester,
2-Hydroxyäthylsulfonylessigsäureäthylester, 2-Cyanoäthylsulfonylessigsäureäthylester,
2-Methoxyäthylsulfonylessigsäureäthylester,
4-Methoxybutylsolfonylessigsäureäthylester,
2-Chloräthylsulfonylessigsäureäthylester, 2-Propenylsulfonylessigsäureäthylester,
2-Äthoxyäthylsulfonylessigsäureäthylester,
3-Chlorpropylsulfonylessigsäureäthylester,
4-Chlorbutylsulfonylessigsäureäthylester,
2-Aminoäthylsulfonylessigsäureäthylester,
3-Diäthylaminopropylsulfonylessigsäureäthylester,
3-Morpholinopropylsulfonylessigsäureäthylester,
2-Methylaminoäthylsulfonylessigsäureäthylester,
Phenylaminomethylsulfonylessigsäureäthylester,
Phenylsulfonylessigsäureäthylester, 4-Methylphenylsulfonylessigsäureäthylester,
4-Chlorphenylsulfonylessigsäureäthylester,
3,4-Dichlorphenylsulfonylessigsäureäthylester,
2,5-Dichlorphenylsulfonylessigsäureäthylester,
4-Äthylphenylsulfonylessigsäureäthylester,
2-Chlorphenylsulfonylessigsäureäthylester,
3-Chlorphenylsulfonylessigsäureäthylester,
Benzylsulfonylessigsäureäthylester, 4-Biphenylsulfonylessigsäureäthylester,
4-Methoxyphenylsulfonylessigsäureäthylester,

3-Äthoxyphenylsulfonylessigsäureäthylester,
2-Chlor-4-methoxyphenylsulfonessigsäureäthylester und
3-Chlor-4-methoxyphenylsulfonylessigsäureäthylester.

Geeignete Verbindungen der Formel V sind beispielsweise:

2-Sulfoäthylsulfonylessigsäure, 2-Sulfopropylsulfonylessigsäure,
Sulfoessigsäure.

Geeignete Verbindungen der Formel VI sind beispielsweise:

3-Methylsulfonyl-7-hydrazinocumarin, 3-Äthylsulfonyl-7-hydrazinocumarin,
3-(n-Butylsulfonyl)-7-hydrazinocumarin, 3-Isopropylsulfonyl-7-hydrazinocumarin,
3-(2'-Hydroxyäthyl)-7-hydrazinocumarin, 3-(2'-Cyanoäthylsulfonyl)-7-hydrazinocumarin,
3-(2'-Methoxyäthylsulfonyl)-7-hydrazinocumarin,
3-(4'-Methoxybutylsulfonyl)-7-hydrazinocumarin,
3-(2'-Chloräthylsulfonyl)-7-hydrazinocumarin,
3-(2'-Propenylsulfonyl)-7-hydrazinocumarin,
3-(2'-Äthoxyäthylsulfonyl)-7-hydrazinocumarin,
3-(3'-Chlorpropylsulfonyl)-7-hydrazinocumarin,
3-(4'-Chlorbutylsulfonyl)-7-hydrazinocumarin,
3-(2'-Aminoäthylsulfonyl)-7-hydrazinocumarin,
3-(3'-Diäthylaminopropylsulfonyl)-7-hydrazinocumarin,
3-(3'-Morpholinopropylsulfonyl)-7-hydrazinocumarin,
3-(2'-Methylaminoäthylsulfonyl)-7-hydrazinocumarin,
3-Phenylaminomethylsulfonyl-7-hydrazinocumarin,
3-(2'-Sulfoäthylsulfonyl)-7-hydrazinocumarin,
3-(2'-Sulfopropylsulfonyl)-7-hydrazinocumarin,
3-Sulfonyl-7-hydrazinocumarin, 3-Phenylsulfonyl-7-hydrazinocumarin,
3-(4'-Methylphenylsulfonyl)-7-hydrazinocumarin,
3-(4'-Chlorphenylsulfonyl)-7-hydrazinocumarin,
3-(3',4'-Dichlorphenylsulfonyl)-7-hydrazinocumarin,
3-(2',5'-Dichlorphenylsulfonyl)-7-hydrazinocumarin,
3-(4'-Äthylphenylsulfonyl)-7-hydrazinocumarin,
3-(2'-Chlorphenylsulfonyl)-7-hydrazinocumarin, 3-Benzylsulfonyl-7-hydrazinocumarin,
3-(4'-Biphenylsulfonyl)-7-hydrazinocumarin,
3-(4'-Methoxyphenylsulfonyl)-7-hydrazinocumarin,
3-(3'-Äthoxyphenylsulfonyl)-7-hydrazinocumarin,
3-(2'-Chlor-4'-methoxyphenylsulfonyl)-7-hydrazinocumarin und
3-(3'-Chlor-4'-methylphenylsulfonyl)-7-hydrazinocumarin.

Geeignete Verbindungen der Formel VII sind beispielsweise:

2,3-Pentandion-2-oxim, 1-Phenyl-1,2-propandion-2-oxim,
1,2-Butandion-1-oxim, 1-Phenyl-1,2-äthandion-2-oxim,
2,3-Heptandion-2-oxim, 3-Phenyl-2-oxy-3-hydroxyimino-propansäureäthylester,
4-Phenyl-1,2-buten-(3)-dion-1-oxim und 2,3-Butandion-2-oxim.

Geeignete Verbindungen der Formel IX sind beispielsweise:

2-Naphthylamin-1-sulfonsäure, 4-Amino-2-methoxy-1-methylbenzol,
3-Amino-6-methoxy-1-methylbenzol, 4-Amino-2-äthoxy-1-methylbenzol,
3-Amino-6-äthoxy-1-methylbenzol, 4-Amino-2-n-butoxybenzol,
4-Amino-2-isopropoxy-1-methylbenzol, 4-Amino-2-sek.-butoxy-1-methylbenzol,
Glykolmonoäthyl-mono-(2-methyl-5-amino)-phenyläther,
4-Amino-2-isoamyloxy-1-methylbenzol, 4-Amino-2-chlor-1-methylbenzol,
4-Amino-1,2-dichlorbenzol, 4-Amino-2-chlor-1äthylbenzol und
4-Amino-2-methoxy-1-chlorbenzol.

Substituenten lassen sich auch nachträglich in die Cumarinverbindungen einführen, beispielsweise durch Umsetzung mit Brom in Eisessig oder Schwefelsäure oder durch Umsetzung mit Oleum zur Einführung einer Sulfonsäuregruppe.

Die erfindungsgemäßen Verbindungen sind aufgrund ihrer Absorption im ultravioletten Bereich und ihrer Fluoreszenz geeignet zum Weißtönen der verschiedensten synthetischen, halbsynthetischen und natürlichen organischen hochmolekularen Materialien.

Cumarinverbindungen der erfindungsgemäßen Art, welche eine saure Gruppe, insbesondere eine Sulfonsäuregruppe, enthalten, lassen sich vor allem zum Aufhellen von natürlichen Fasermaterialien, z. B. von Wolle und Baumwolle, verwenden, während Cumarinverbindungen, welche basische Gruppen, z. B. tert. Aminogruppen oder quartäre Ammoniumgruppen, enthalten, sich zum Aufhellen von Materialien aus Polyacrylnitril eignen.

Cumarinverbindungen der Formel I, die weder saure noch basische Gruppen enthalten und infolgedessen in Wasser schwer löslich sind, eignen sich zum Aufhellen von Materialien aus synthetischen Polykondensaten wie Polyestern, Polyamiden und Polyurethanen sowie zum Aufhellen von Materialien aus Polyacrylnitril, Polystyrol oder Celluloseestern.

Die Cumarinverbindungen der Formel I können auch Spinn- und Gießmassen zur Herstellung von Fasern, Fäden, Folien und anderen Gebilden zugesetzt werden sowie als Laserfarbstoffe Verwendung finden.

Die Menge der erfindungsgemäß zu verwendenden neuen Weißtöner — bezogen auf das weiß zu tönende Material — kann in weiten Grenzen schwanken. Für die meisten praktischen Belange sind vorzugsweise in Mengen zwischen 0,01 und 0,2 Gew.-% von Interesse.

Die erfindungsgemäßen Cumarinverbindungen zeichen sich durch eine hohe Weißkraft aus und sind in dieser Hinsicht den aus der japanischen Patentpublikation 73/17 616 bekannten 7-Pyrazolylcumarinen deutlich überlegen.

Beispiel 1

Zu einer Lösung aus 11,2 g (0,04 Mol) 4-[4′-Methyl-5′-phenyl-1′,2′,3′-triazolyl-(2′)]-salicylaldehyd und 10,9 g (0,045 Mol) 4-Methylphenylsulfonylessigsäureäthylester in 200 ml Xylol werden 3 g Piperidin getropft. Die Reaktionsmischung wird 2–3 Std. am Rückfluß erhitzt, wobei gleichzeitig das entstehende Wasser azeotrop abdestilliert wird. Das abgeschiedene Produkt wird nach dem Abkühlen abfiltriert und mit Methanol gewaschen. Man erhält so 14,2 g (77,7% der Theorie) hellgelber Kristalle der Verbindung der Formel

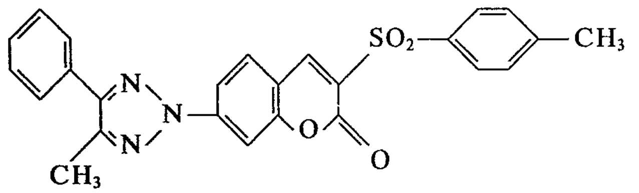

(1)

die, aus Toluol umkristallisiert, in Dimethylformamid gelöst, eine sehr starke blaue Fluoreszenz zeigen. Auf Polyesterfasermaterial zeigt die Verbindung, nach dem HT-Ausziehverfahren gefärbt, hervorragende Aufhellungseffekte.

Der als Ausgangsstoff dienende 4-Methylphenylsulfonylessigsäureäthylester wird durch Erhitzen von 3-methylphenylsulfinsaurem Natrium und Chloressigsäureäthylester in Äthanol unter Rückfluß hergestellt. Auf die gleiche Weise lassen sich auch die im Rahmen dieser Patentschrift verwendeten substituierten Sulfonylessigsäuren bzw. -ester herstellen.

Der 4-[4′-Methyl-5′-phenyl-1′,2′,3′-triazolyl-(2′)]-salicylaldehyd kann z. B. durch Umsetzung von 4-(1′,2′,3′-Triazolyl-2′)-phenol mit 1,1′,3,3′-Tetraphenyl-2,2′-biimidazolidinyliden und anschließender Hydrolyse des entsprechenden 2-Imidazolidin-2-yl-phenols hergestellt werden (s. H. Giesecke und J. Hocker, Liebigs Ann. Chem. 1978, 345). Ebenso lassen sich auch die im Rahmen dieser Patentschrift verwendeten substituierten Triazolylsalicylaldehyde synthetisieren.

Verwendet man anstelle von 4′-Methylphenylsulfonylessigsäureäthylester eine äquivalente Menge 4-Chlorphenylsulfonylessigsäureäthylester und verfährt im übrigen wie im Beispiel beschrieben, so erhält man die Verbindung der Formel

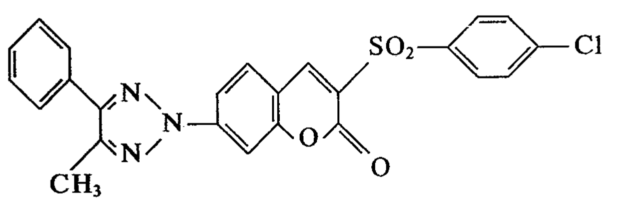

(2)

die aus Xylol/Bleicherde umkristallisiert wird. Sie zeigt — in Dimethylformamid gelöst — eine starke blauviolette Fluoreszenz.

## Beispiel 2

Analog Beispiel 1 erhält man aus 11,6 g (0,05 Mol) 4-(4′-Methyl-5′-äthyl-1′,2′,3′-triazolyl-2′)-salicylaldehyd und 13,1 g (0,05 Mol) 4-Chlorphenylsulfonylessigsäureäthylester 18,7 g (87% der Theorie) der Verbindung der Formel

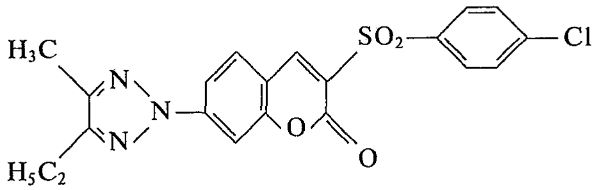

(3)

die aus Chlorbenzol unter Zuhilfenahme von Bleicherde gereinigt werden kann. Dieses Produkt zeigt — in Dimethylformamid gelöst — eine starke rotviolette Fluoreszenz und liefert auf Polyester im HT-Ausziehverfahren brillante Weißeffekte.

## Beispiel 3

Eine Lösung von 11,2 g (0,04 Mol) 4-(4′-Methyl-5′-phenyl-1′,2′,3′-triazolyl-2′)-salicylaldehyd und 7,5 g (0,045 Mol) Methylsulfonylessigsäureäthylester in 100 ml Äthanol wird tropfenweise mit 1 ml Piperidin versetzt. Die Mischung wird 3 Std. am Rückfluß erhitzt und das abgeschiedene Reaktionsprodukt abfiltriert und mit Äthanol gewaschen. Die erhaltene Verbindung (12,8 g≙84% der Theorie) der Formel

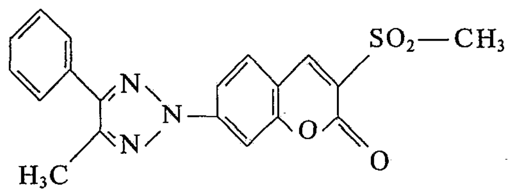

(4)

wird aus 1,2-Dichlorbenzol/Bleicherde umkristallisiert und zeigt — in Dimethylformamid gelöst — eine briallante blaue Fluoreszenz.

## Beispiel 4

In gleicher Weise, wie im Beispiel 3 angegeben, erhält man aus 11,2 g (0,04 Mol) 4-(4′-Methyl-5′-phenyl-1′,2′,3′-triazolyl-(2′)-salicylaldehyd und 9,8 g (0,04 Mol) 4-Methoxybutylsulfonylessigsäureäthylester 15,9 g (87,7% der Theorie) der Verbindung der Formel

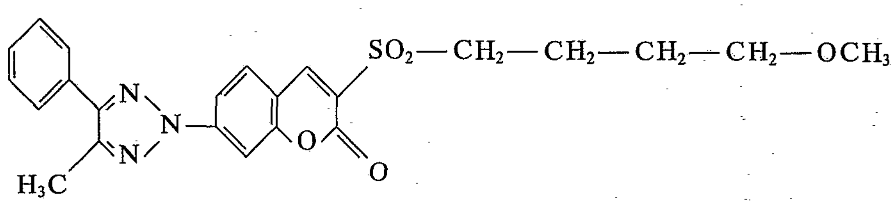

(5)

in Form von hellgelben Kristallen, die aus Chlorbenzol/Bleicherde umkristallisiert werden. Sie zeigen — in Dimethylformamid gelöst — eine brillante rotstichig blaue Fluoreszenz.

## Beispiel 5

Eine Mischung aus 23,1 g (0,1 Mol) 4-(4′-Methyl-5′-äthyl-1′,2′,3′-triazolyl-2′)-salicylaldehyd, 9,8 g wasserfreiem Natriumacetat, 26,9 g (0,1 Mol) 3,4-Dichlorphenylsulfonylessigsäure und 60 g Essigsäureanhydrid wird 15 Std. am Rückfluß erhitzt. Man kühlt auf ca. 70°C ab und versetzt mit 50 ml Methanol. Nach Abkühlen auf 0°C wird das ausgefallene Produkt abgesaugt und mit Methanol gewaschen. Man erhält so 32,5 g (63,4% der Theorie) gelbe Kristalle der Verbindung der Formel

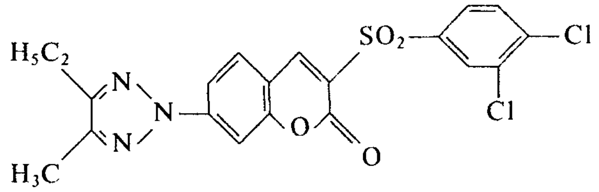

(6)

die aus Xylol/Bleicherde umkristallisiert werden und in Dimethylformamid gelöst eine stark blaue Fluoreszenz zeigen.

Aus 26,6 g (0,1 Mol) 4-(4'-Phenyl-1',2',3'-triazolyl-2')-salicylaldehyd und 26,9 g (0,1 Mol) 2,5-Dichlorphenylsulfonylessigsäure erhält man in gleicher Weise 25,5 g (51,2% der Theorie) der Verbindung der Formel

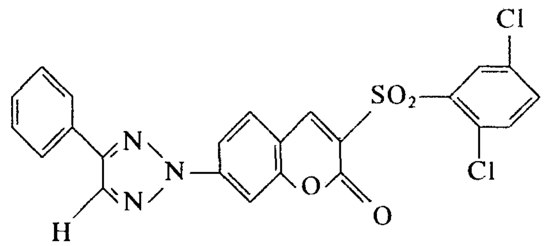

(7)

die aus Chlorbenzol/Bleicherde umkristallisiert werden. Die Verbindung zeigt in Dimethylformamid eine blaue Fluoreszenz.

## Beispiel 6

83,1 g (0,3 Mol) 4-Benzolsulfonamidsalicylaldehyd, 72,6 g (0,3 Mol) 4-Methylsulfonylessigsäureäthylester und 10 ml Piperidin werden in 750 ml Äthanol 3 Std. am Rückfluß erhitzt. Es wird abgekühlt und der ausgefallene gelbe Niederschlag abfiltriert. Man erhält so 130 g (95% der Theorie) der Verbindung der Formel

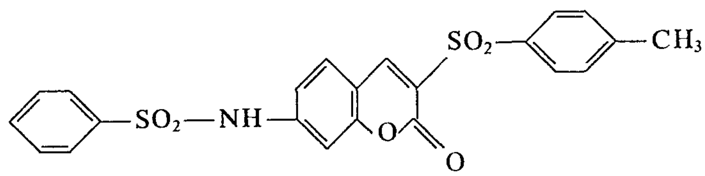

(8)

die man aus Acetonitril umkristallisieren kann.

In 150 g 80%iger Schwefelsäure werden bei Raumtemperatur 58,9 g (0,13 Mol) 3-(4'-Tolylsulfonyl)-7-benzolsulfonamidocumarin eingetragen. Die Suspension wird 3 Std. bei 90—100°C verrührt. Man kühlt auf 0°C ab und versetzt mit 500 ml Wasser. Bei 0—5°C wird mit einer Lösung von 9 g (0,13 Mol) Natriumnitrit in 40 ml Wasser diazotiert. Man rührt 1 Std. nach und läßt die Suspension innerhalb von 1,5 Std. bei 0—5°C zu einer Lösung aus 26,8 g (0,12 Mol) 2-Aminonaphthalinsulfonsäure in 300 ml Wasser laufen, die mit konz. Natronlauge auf pH 6 eingestellt wurde. Durch Zugabe von Natronlauge wird während der Eintropfzeit ein pH von 4,5—5 gehalten. Nach 1stündigem Nachrühren bei 0°C wird die gebildete Azoverbindung abfiltriert, mit Wasser gewaschen und in 200 ml Pyridin suspendiert. Die Suspension wird mit 100 g Kupfer(II)-acetat versetzt, 45 Min. bei 75—80°C gerührt und abgekühlt. Die ausgefallene Verbindung der Formel

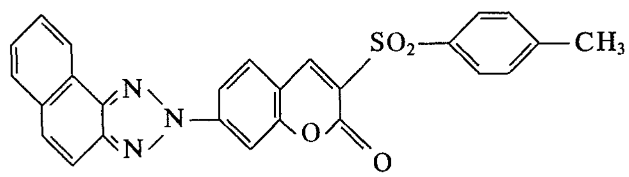

(9)

wird abfiltriert und mit Wasser gewaschen. Man erhält 38,5 g (63% der Theorie) hellgelbe Kristalle, die aus 1,2-Dichlorbenzol umkristallisiert werden. Sie zeigen eine blauviolette Fluoreszenz in Dimethylformamid.

Setzt man anstelle der 2-Aminonaphthalinsulfonsäure 3-Methyl-4-methoxyanilin in der oben beschriebenen Weise um, so erhält man die Verbindung der Formel

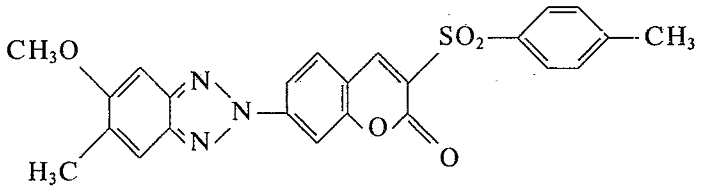

(10)

die — in Dimethylformamid gelöst — eine stark blaue Fluoreszenz zeigt. Die Cumarinverbindung hellt Polyester nach dem HT-Verfahren in Gegenwart von Natriumchlorit gut auf.

Beispiel 7

Eine Lösung von 11,2 g (0,04 Mol) 4-(4'-Methyl-5'-phenyl-1',2',3'-triazolyl-2')-salicylaldehyd und 8,3 g (0,04 Mol) Chlormethylsulfonylessigsäureäthylester in 100 ml Äthanol wird tropfenweise mit 1 ml Piperidin versetzt. Die Mischung wird 3 Std. am Rückfluß erhitzt und das abgeschiedene Reaktionsprodukt abfiltriert und mit Äthanol gewaschen. Das erhaltene Produkt (13,7 g≙82% der Theorie) der Formel

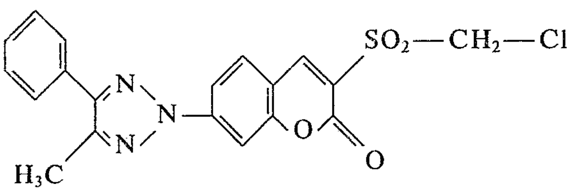

(11)

wird aus Chlorbenzol/Bleicherde umkristallisiert und zeigt — in Dimethylformamid gelöst — eine brillante blaue Fluoreszenz.

Die Umsetzung mit Triäthylamin liefert eine kationische Cumarinverbindung der Formel

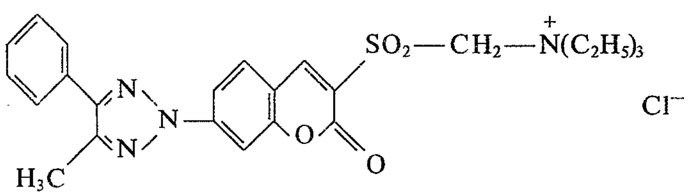

(12)

die Polyacrylnitril im Ausziehverfahren sehr gut aufhellt.

Auf die gleiche Weise — wie oben beschrieben — erhält man auch die Verbindung der Formel

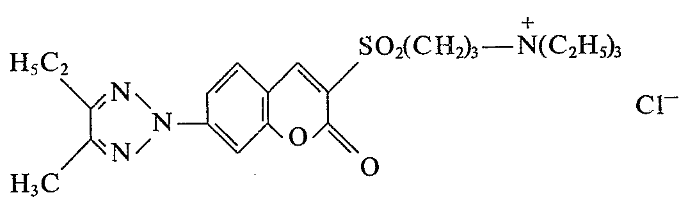

(13)

die ebenfalls Polyacrylmaterialien sehr gut aufhellt.

Beispiel 8

Eine Mischung aus 28 g (0,1 Mol) 4-(4'-Methyl-5'-phenyl-1',2',3'-triazolyl-2')-salicylaldehyd, 9,8 g wasserfreiem Natriumacetat, 14 g (0,1 Mol) Sulfoessigsäure und 60 g Essigsäureanhydrid wird 24 Std. am Rückfluß erhitzt. Danach wird das Lösungsmittel zum größten Teil im Vakuum abdestilliert und der Rückstand bei 20°C mit Methanol versetzt. Das ausgefallene Produkt wird abgesaugt und mit Methanol gewaschen. Man erhält so 19,5 g (43,6% der Theorie) des Natriumsalzes der Verbindung der Formel

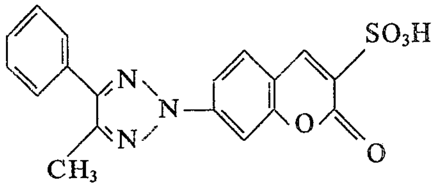

(14)

das auf Wolle und Polyamid im Ausziehverfahren deutliche Aufhellungseffekte zeigt.

Beispiel 9

Nach den in den Beispielen 1, 3, 5, 6, 7 und 8 beschriebenen Verfahren werden auch die folgenden Verbindungen der Formel

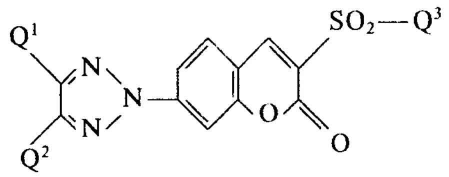

(15)

hergestellt:

| Verbindung Nr. | $Q^1$ | $Q^2$ | $Q^3$ | Fluoreszenzfarbe in DMF |
|---|---|---|---|---|
| 16 | 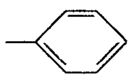 | $CH_3$ | 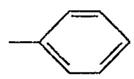 | blauviolett |
| 17 | $C_2H_5$ | $CH_3$ | 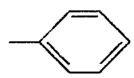 | schwach rotst. blau |
| 18 | 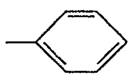 | $CH_3$ | 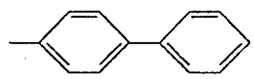 | blau |
| 19 | 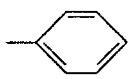 | $CH_3$ | 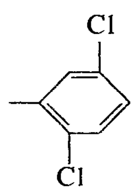 | blau |
| 20 | 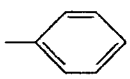 | $CH_3$ | 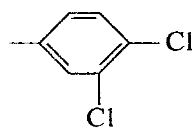 | stark blau |
| 21 | 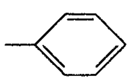 | $CH_3$ | $-CH_2-CH_2-CN$ | blauviolett |
| 22 | $C_2H_5$ | $CH_3$ | $-CH_2-CH_2-OCH_3$ | rotstichig blau |
| 23 | 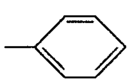 | $CH_3$ | $-NH-(CH_2)_2-\overset{+}{N}(C_2H_5)_3\ Cl^-$ | neutral blau |
| 24 | $C_2H_5$ | $CH_3$ | $-CH_2-CH_2-SO_3H$ | rotviolett |
| 25 | $C_2H_5$ | $CH_3$ | $-CH_2-$ 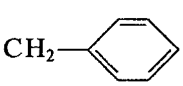 | stark rotst. blau |
| 26 | $C_2H_5$ | $CH_3$ | 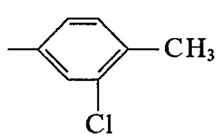 | rotviolett |
| 27 | 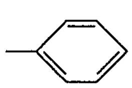 | H | $-CH_2-CH_2-OH$ | blau |

Fortsetzung

| Verbindung Nr. | $Q^1$ | $Q^2$ | $Q^3$ | Fluoreszenzfarbe in DMF |
|---|---|---|---|---|
| 28 | 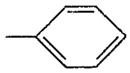 | H | $Cl—(CH_2)_4—$ | blauviolett |
| 29 | $—CH{=}CH—$ 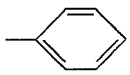 | H | $—(CH_2)_2NHCH_3$ | rötlich blau |
| 30 | $C_2H_5$ | Cl | $—CH_2—CH(CH_3)_2$ | rotstichig blau |
| 31 | $OCH_3$ | H | $Cl—CH_2—CH(OH)—$ | schwach rotst. blau |
| 32 | $OC_4H_9$-n | H | $—CH_2—CH_2—CN$ | blau |
| 33 | $CH_3$ | $CH_3$ | $—CH_2—CH_2—O—C_2H_5$ | rotst. blau |
| 34 | $C_2H_5OOC$ | H | $—CH_2—$ 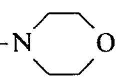 | neutral blau |
| 35 | 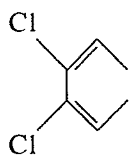 | | $CH_3$ | stark blau |
| 36 | CN | H | $—CH_2CH_2—SO_3H$ | blau |
| 37 | $C_2H_5$ | $CH_3$ | $—CH_2—CH{=}CH_2$ | rotst. blau |

Beispiel 38

150 g p-chlorphenyl-sulfinsaures Natrium (70,2%ig≙105,3 g 100%ig≙0,53 Mol) werden in 2,8 l Äthanol mit 87,7 g Bromessigsäureäthylester 4 Std. unter Rückfluß zum Sieden erhitzt, nacheinander 122,5 g 4-(4-Methyl-5-phenyl-1,2,3-triazol-2-yl)-salicylaldehyd-Natriumsalz (98,3%ig≙120,4 g 100%ig≙0,4 Mol) und 24 g Eisessig hinzugegeben und die Suspension 20 Min. verrührt. Anschließend fügt man 15 ml Piperidin hinzu, erhitzt die Mischung 30 Min. unter Rückfluß und Rühren zum Sieden und kühlt ab. Der kristalline Niederschlag wird abgesaugt, in mehreren Portionen mit insgesamt 1 l Äthanol, dann mit 2 l Wasser gewaschen und bei 80° C im Vakuum getrocknet. Man erhält 162,4 g (85% der Theorie) Verbindung der Formel

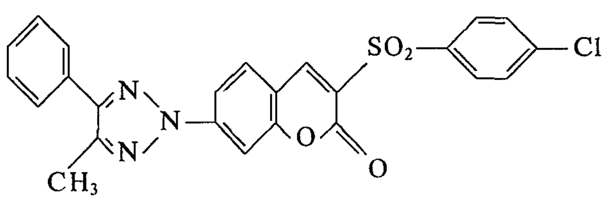

**Patentansprüche**

1. Cumarinverbindungen der Formel

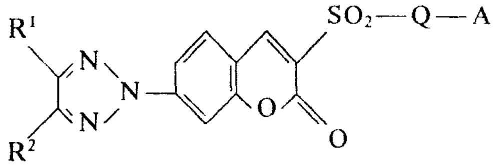

worin

A gegebenenfalls durch Hydroxy, Chlor, Cyano, Sulfo, Alkoxy oder einen Rest der Formel

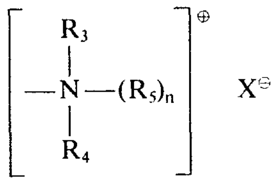

substituiertes Alkyl; Benzyl; Alkenyl oder gegebenenfalls durch Chlor, Alkyl, Alkoxy substituiertes Phenyl, Naphthyl oder Biphenyl,

Q NH oder eine direkte Bindung,

$R^1$ Alkyl, Alkoxy, gegebenenfalls durch Alkyl, Alkoxy oder Chlor substituiertes Phenyl oder Styryl,

$R^2$ Wasserstoff, Chlor oder $R^1$,

$R_3$ und $R_4$ unabhängig voneinander Wasserstoff, Alkyl, Benzyl, Phenyl oder gemeinsam zusammen mit dem Stickstoffatom Morpholino, Piperidino, Piperazino, Pyrrolidino oder Hexamethylenimino,

$R_5$ Alkyl, Alkenyl oder Benzyl,

n 0 oder 1 und

X einen farblosen Säurerest bedeuten, wobei die genannten Alkyl-, Alkenyl- und Alkoxyreste bis zu 4 C-Atome aufweisen können.

2. Cumarinverbindungen gemäß Anspruch 1, dadurch gekennzeichnet, daß

$R_1$ Alkyl oder gegebenenfalls durch Alkyl, Alkoxy oder Chlor substituiertes Phenyl,

$R_2$ Wasserstoff, Chlor oder $R_1$,

Q eine direkte Bindung und

A gegebenenfalls durch Hydroxy, Chlor, Cyano, Sulfo oder Alkoxy substituiertes Alkyl, Benzyl, Alkenyl oder gegebenenfalls durch ein bis zwei Chlor, Alkyl, Alkoxy substituiertes Phenyl oder Biphenylyl bedeuten und die Alkyl-, Alkenyl- und Alkoxyreste die in Anspruch 1 genannte Bedeutung haben.

3. Verfahren zur Herstellung von Cumarinverbindungen gemäß Anspruch 1, dadurch gekennzeichnet, daß man Triazolylylsalicylaldehyde der Formel

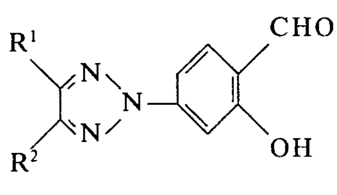

worin $R^1$ und $R^2$ die in Anspruch 1 angegebene Bedeutung haben, mit substituierten Essigestern der Formel

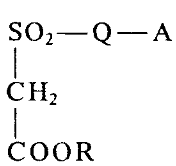

worin

A und Q die in Anspruch 1 angegebene Bedeutung haben und
R für $C_1$- bis $C_4$-Alkyl steht,

in Gegenwart von basischen Katalysatoren kondensiert.

4. Verfahren zur Herstellung von Cumarinverbindungen gemäß Anspruch 1, dadurch gekennzeichnet, daß man Triazolylsalicylaldehyde der Formel

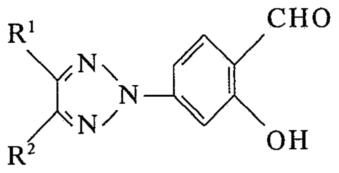

worin $R^1$ und $R^2$ die in Anspruch 1 angegebene Bedeutung haben,
mit substituierten Essigsäuren der Formel

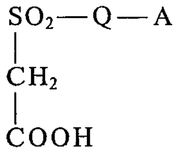

worin A die in Anspruch 1 angegebene Bedeutung hat,
in Gegenwart von Natriumacetat und Essigsäureanhydrid kondensiert.

5. Verfahren zur Herstellung von Cumarinverbindungen gemäß Anspruch 1, dadurch gekennzeichnet, daß man 7-Hydrazinocumarinverbindungen der Formel

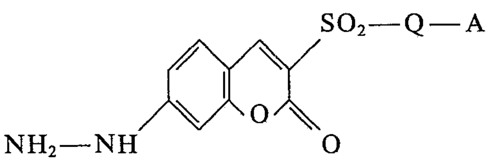

worin A und Q die in Anspruch 1 angegebene Bedeutung haben,
mit $\alpha$-Isonitrosoketonen der Formel

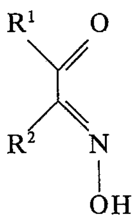

worin $R^1$ und $R^2$ die in Anspruch 1 angegebene Bedeutung haben,

zu Verbindungen der Formel

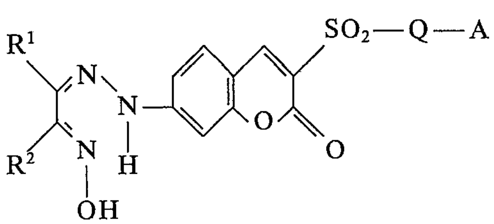

kondensiert und cyclisiert.

6. Verfahren zur Herstellung von Cumarinverbindungen gemäß Anspruch 1, dadurch gekennzeichnet, daß man auf aromatische Amine der Formel

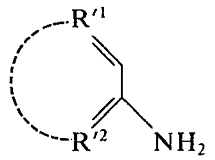

wobei
$R'^1$ und $R'^2$ zusammen ein gegebenenfalls substituiertes Benzo- oder Naphthosystem bedeuten.

7-Diazoniumsalze der Formel

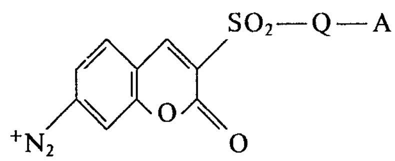

worin A die in Anspruch 1 genannte Bedeutung hat,

zu Verbindungen der Formel

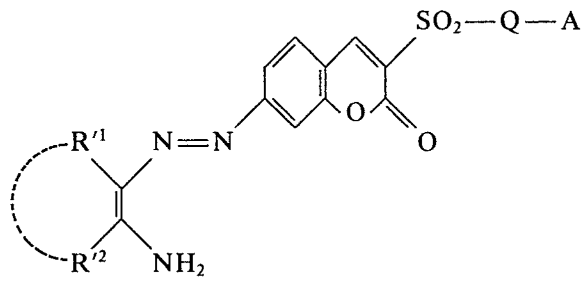

kuppelt und diese anschließend durch Erhitzen in Gegenwart von Cu(II)-salzen dehydrierend cyclisiert.

7. Verwendung der Cumarinverbindungen gemäß Anspruch 1 als Weißtöner und Laserfarbstoffe.

**Claims**

1. Coumarin compounds of the formula

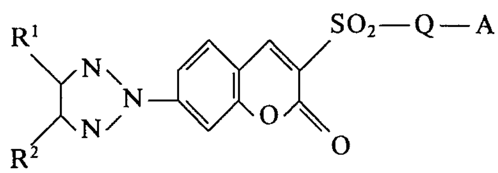

wherein

A denotes alkyl optionally substituted by hydroxy, chlorine, cyano, sulpho, alkoxy or a radical of the formula

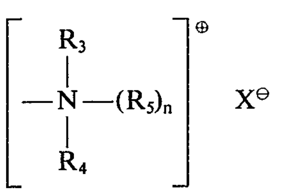

benzyl; alkenyl; or phenyl, naphthyl or biphenyl optionally substituted by chlorine, alkyl or alkoxy,
Q denotes NH or a direct bond,
$R^1$ denotes alkyl, alkoxy, phenyl which is optionally substituted by alkyl, alkoxy, or chlorine, or styryl,
$R^2$ denotes hydrogen, chlorine or $R^1$,
$R_3$ and $R_4$ independently of one another denote hydrogen, alkyl, benzyl or phenyl, or conjointly,

together with the nitrogen atom, denote morpholino, piperidino, piperazino, pyrrolidino or hexamethyleneimino,

$R_5$ denotes alkyl, alkenyl or benzyl,

n denotes 0 or 1 and

X denotes a colourless acid radical, it being possible for the alkyl, alkenyl and alkoxy radicals mentioned to contain up to 4 C-atoms..

2. Coumarin compounds according to Claim 1, characterised in that

$R^1$ denotes alkyl or phenyl which is optionally substituted by alkyl, alkoxy or chlorine,

$R^2$ denotes hydrogen, chlorine or $R^1$,

Q denotes a direct bond and

A denotes alkyl optionally substituted by hydroxy, chlorine, cyano, sulpho or alkoxy, benzyl, alkenyl, or phenyl or biphenylyl optionally mono- or di-substituted by chlorine, alkyl or alkoxy and the alkyl, alkenyl and alkoxy radicals have the meaning given in Claim 1.

3. Process for the preparation of coumarin compounds according to Claim 1, characterised in that triazolylsalicylaldehydes of the formula

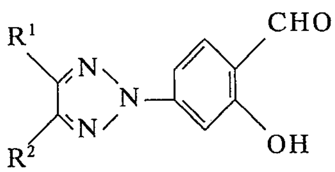

wherein

$R^1$ and $R^2$ have the meaning given in Claim 1,

are subjected to condensation reactions with substituted acetic acid esters of the formula

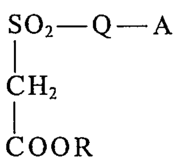

wherein

A and Q have the meaning given in Claim 1 and

R represents $C_1$- to $C_4$-alkyl,

in the presence of basic catalysts.

4. Process for the preparation of coumarin compounds according to Claim 1, characterised in that triazolylsalicylaldehydes of the formula

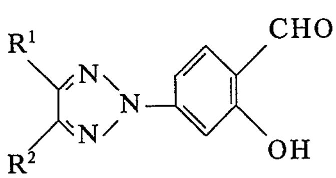

wherein

$R^1$ and $R^2$ have the meaning given in Claim 1,

are subjected to condensation reactions with substituted acetic acids of the formula

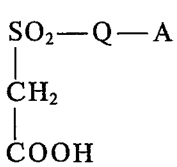

wherein

A has the meaning given in Claim 1,

in the presence of sodium acetate and acetic anhydride.

5. Process for the preparation of coumarin compounds according to Claim 1, characterised in that 7-hydrazinocoumarin compounds of the formula

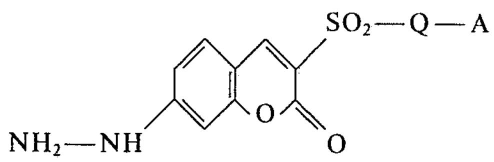

wherein

A and Q have the meaning given in Claim 1,

are subjected to condensation reactions with $\alpha$-isonitrosoketones of the formula

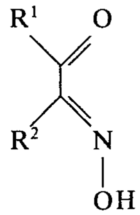

wherein

$R^1$ and $R^2$ have the meaning given in Claim 1,

to the compounds of the formula

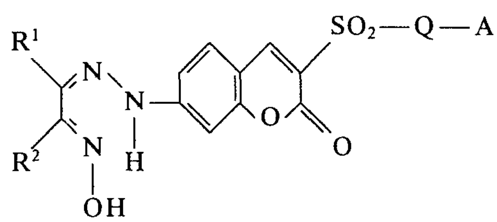

and these are cyclised.

6. Process for the preparation of coumarin compounds according to Claim 1, characterised in that aromatic amines of the formula

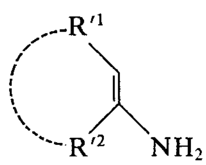

wherein

$R'^1$ and $R'^2$ together denote an optionally substituted benzene or naphthalene system,

are coupled to 7-diazonium salts of the formula

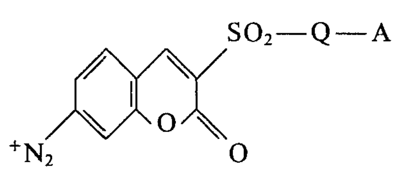

wherein

A has the meaning given in Claim 1,

to give compounds of the formula

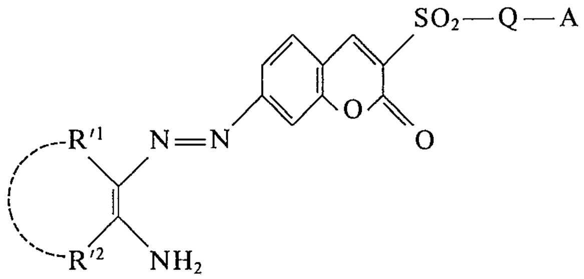

and these are then dehydrogenated and cyclised by heating in the presence of Cu-II-salts.

7. Use of the coumarin compounds according to Claim 1 as whiteners and laser dyestuffs.

**Revendications**

1. Dérivés de la coumarine, de formule

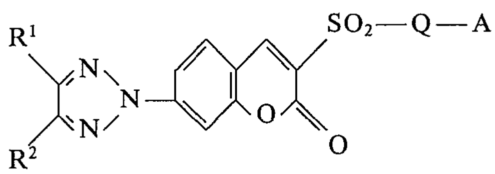

dans laquelle

A représente un groupe alkyle éventuellement substitué par des groupes hydroxy, le chlore, des groupes cyano, sulfo, alcoxy ou un reste de formule

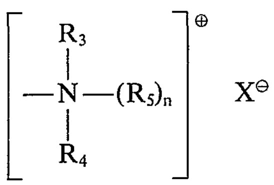

un groupe benzyle; un groupe alcényle ou un groupe phényle, naphtyle ou biphényle éventuellement substitué par le chlore, des groupes alkyle ou alcoxy,

Q représente NH ou une liaison directe,

$R^1$ représente un groupe alkyle, alcoxy, phényle ou styryle éventuellement substitué par des groupes alkyle, alcoxy ou le chlore,

$R^2$ représente l'hydrogène, le chlore ou $R^1$,

$R_3$ et $R_4$ représentent chacun, indépendamment l'un de l'autre, l'hydrogène, un groupe alkyle, benzyle, phényle, ou bien ils forment ensemble et avec l'atome d'azote un groupe morpholino, pipéridino, pipérazino. pyrrolidino ou hexaméthylène-imino,

$R^5$ représente un groupe alkyle, alkényle ou benzyle,

n est égal à 0 ou 1 et

X représente un reste acide incolore, étant spécifié que les groupes alkyle, alcényle et alcoxy mentionnés peuvent contenir jusqu'à 4 atomes de carbone.

2. Dérivés de la coumarine selon la revendication 1, caractérisés en ce que

$R^1$ représente un groupe alkyle ou un groupe phényle éventuellement substitué par des groupes alkyle, alcoxy ou le chlore,

$R^2$ représente l'hydrogène, le chlore ou $R^1$

Q représente une liaison directe et

A représente un groupe alkyle, benzyle, alcényle éventuellement substitué par des groupes

hydroxy, le chlore, des groupes cyano, sulfo ou alcoxy, ou un groupe phényle ou biphénylyle éventuellement substitué par 1 à 2 atomes de chlore, groupes alkyle ou alcoxy, et les restes alkyle, alcényle et alcoxy ont la signification indiquée dans la revendication 1.

3. Procédé de préparation des dérivés de la coumarine selon la revendication 1, caractérisé en ce que l'on condense des aldéhydes triazolylylsalicyliques de formule

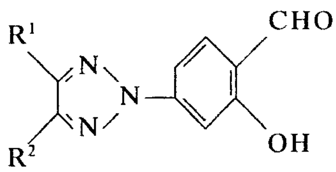

dans laquelle $R^1$ et $R^2$ ont les significations indiquées dans la revendication 1,

avec des esters acétiques substitués de formule

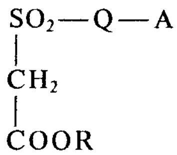

dans laquelle

A et Q ont les significations indiquées dans la revendication 1 et
R représente un groupe alkyle en C1 – C4,

en présence de catalyseurs basiques.

4. Procédé de préparation des dérivés de la coumarine selon la revendication 1, caractérisé en ce que l'on condense des aldéhydes triazolylsalicyliques de formule

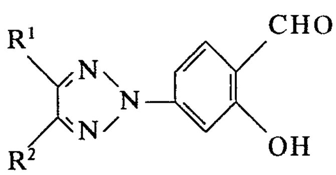

dans laquelle $R^1$ et $R^2$ ont les significations indiquées dans la revendication 1,

avec des acides acétiques substitués de formule

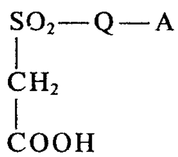

dans laquelle A a les significations indiquées dans la revendication 1, en présence d'acétate de sodium et d'anhydride acétique.

5. Procédé de préparation des dérivés de la coumarine selon la revendication 1, caractérisé en ce que l'on condense des dérivés de la 7-hydrazinocoumarine de formule

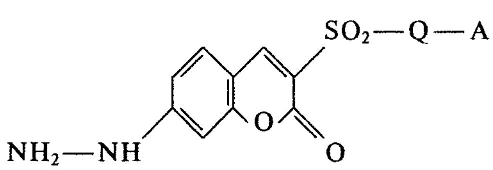

dans laquelle A et Q ont les significations indiquées dans la revendication 1,

avec des alpha-isonitrosocétones de formule

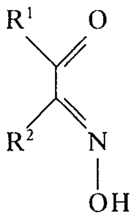

dans laquelle $R^1$ et $R^2$ ont les significations indiquées dans la revendication 1,

en composés de formule

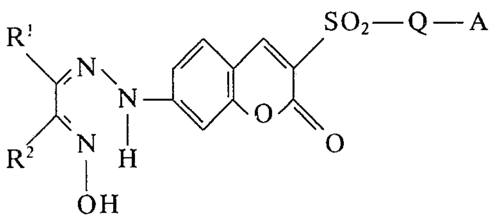

et on cyclise.

6. Procédé de préparation de dérivés de la coumarine selon la revendication 1, caractérisé en ce que l'on copule, sur des amines aromatiques de formule

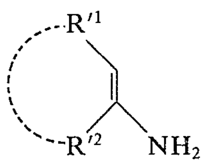

dans laquelle $R'^1$ et $R'^2$ forment ensemble un système benzo ou naphto éventuellement substitué,

des sels de 7-diazonium de formule

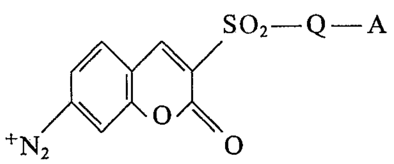

dans laquelle A a la signification indiquée dans la revendication 1,

en composés de formule

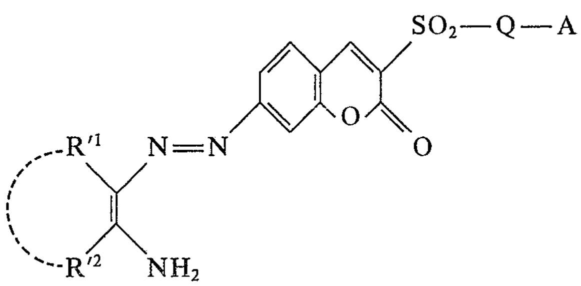

qu'on soumet ensuite à cyclisation déshydratante par chauffage en présence de sels de Cu-II.

7. Utilisation des dérivés de la coumarine selon la revendication 1 en tant qu'azureurs et colorants lasers.